**Europäisches Patentamt**

**European Patent Office**

**Office européen des brevets**

(19)

(11) Publication number : **0 347 554 B1**

(12) # EUROPEAN PATENT SPECIFICATION

(45) Date of publication of patent specification :
**18.03.92 Bulletin 92/12**

(51) Int. Cl.⁵ : **A47J 31/52, A47J 31/56, A47J 31/40**

(21) Application number : **89107362.9**

(22) Date of filing : **24.04.89**

(54) **Machine for espresso coffee with electronic management, outfitted with emergency command.**

(30) Priority : **23.06.88 IT 8342488**

(43) Date of publication of application :
**27.12.89 Bulletin 89/52**

(45) Publication of the grant of the patent :
**18.03.92 Bulletin 92/12**

(84) Designated Contracting States :
**AT DE ES FR GB GR**

(56) References cited :
**EP-A- 0 093 366**
**FR-A- 2 410 876**
**FR-A- 2 544 186**
**NL-A- 8 103 534**

(73) Proprietor : **LA SAN MARCO S.p.A.**
**Via F.lli Venuti 6**
**I-34072 Gradisca D'Isonzo (Go) (IT)**

(72) Inventor : **Rorato, Claudio**
**c/o LA SAN MARCO S.P.A. Via F.11i Venuti 6**
**I-34072 Gradisca D'Isonzo (GO) (IT)**

(74) Representative : **D'Agostini, Giovanni, Dr.**
**D'AGOSTINI ORGANIZZAZIONE n. 17 via**
**G.Giusti**
**I-33100 Udine (IT)**

EP 0 347 554 B1

## Description

The present invention has for object a machine for espresso coffee with electronic management control board, outfitted with emergency command particularly for Public Service.

In prior art are well known machines for espresso coffee with drink electronic management control board or calculator that in operation can involve possible defects requiring maintenance particularly deriving from electronic circuits.

It is further known than an electronic control board or calculator cannot be so easily repaired as a traditional mechanical defect, (Eg. simple substitution of the damaged apparatus is the remedy). similarly is not conceivable that the barman can intervene to complex electronic apparatus even for simply remedies.

The damage resulting in this case being relevant for the fact that the machine in maintenance being obliged to remain stopped notwithstanding the continuously necessities of the clients.

Purpose of this invention is to avoid said inconveniences.

This purpose is reached with the present invention with the characteristics as in the attached claims, solving the problems by an espresso coffee machine with electronic management control board or microprocessor, outfitted with emergency command particularly for Public Service, characterized in that it comprises emergency command means that:

– cutoff the electric power to the line feeding said microprocessor;

– intervene directly for operating on a first solenoid valve means of at least a respective hot water supply unit in association with a hot water supply pump means from an exchanger in a hot water boiler and on a second solenoid valve means, in order to allow emergency supply in said hot water supply unit.

In this way even if the microprocessor do not function, it will be always possible with simple emergency command, notwithstanding the damaged electronic apparatuses, to supply espresso coffee in manual mode, within the arrival of a specialized technician for the respective reactivation.

So the clients even in reduced service will be equally satisfied.

Advantageously the emergency commands are provided of:

– at least a breaker for interrupting the supply of electric current at said microprocessor;

– at least a breaker that operates the respective solenoid-valve and further operates the respective water supply pumping means with the purposes of closing the discharge and to convey the hot water supply for the coffee production.

In this way is more simplified the emergency intervention.

Advantageously the machines for espresso coffee comprises supply unit with three ways solenoid valves normally opened for coffee issuing end interdicting circulation of hot water into the respective boiler exchanger, characterized characterized for further comprising:

– at least a switch/breaker for cutting-off the power supply to said electronic control board or microprocessor and further supply electric power for the direct operation of the respective hot water pumping means for a respective hot water/coffee supply unit in order to allow notwithstanding coffee issue;

– at least a switch/breaker of respective hot water/coffee supply group that operates the respective solenoid-valve for authorizing the supply of hot water in said supply unit interdicting the respective discharge/wasting line.

With this solution the coffee machine is completely simplified.

Advantageously the commands that intervene on said solenoid valve operates for the time that the command is operated. In this mode emergency intervention system is further simplified without necessity of dosers or timers, rendering possible as desired, the production of espresso coffee, normal coffee or long coffee, end so on. depending from how the command button of the respective emergency device is maintained pressed.

Advantageously said microprocessor ed said commands of emergency are applied laterally to the power line powering the respective supply unit.

With this solution said commands being operatively placed on the power line supply, do not interfere with the sets of circuits at low voltage of the electronic circuits and can be easily accessed. Alternately being applied frontally at its basis. These and others advantages will appear from next itemized description of a preferred solution of the invention with the help of the enclosed drawings in which the details of execution have not to be intended be limitative but for example only.

The figure 1 represents a perspectival schematic and partial view of the coffeemachines with the emergency command of the invention.

The figure 2 represents a side view of coffee machine represented in figure 1, with removed the respective carter for visualizing the optimal position of the respective emergency means in rapport to the microprocessor.

The figure 3 represents an electric scheme of the espresso coffee machine in the specific case with two coffee supply unit.

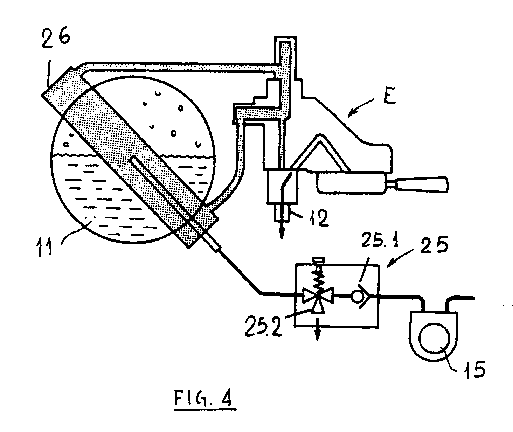

The figure 4 represents a schematic view of the one hydraulic circuit of one unit passing in the boiler.

With reference to the figures the espresso coffee machine comprises frontal main power line breaker (I) under the plan of discharge liquid (P).

A pensile jutting superiorly comprises the programming and management command of the electronic circuits and devices of each coffee supply unit, operating at low power (C).

The respective supply command levers (M) are placed in side position. As for this invention the emergency commands are placed laterally on the respective structure of the machine and comprise three emergency buttons (B):

– the first one for interrupting the electric power supply to the microprocessor (4) without to interrupt the respective operation of pumping means;

– the second ones for activating the respective solenoid valve means (10) of the coffee supply unit (E) in association with the pumps (15) already in operative conditon.

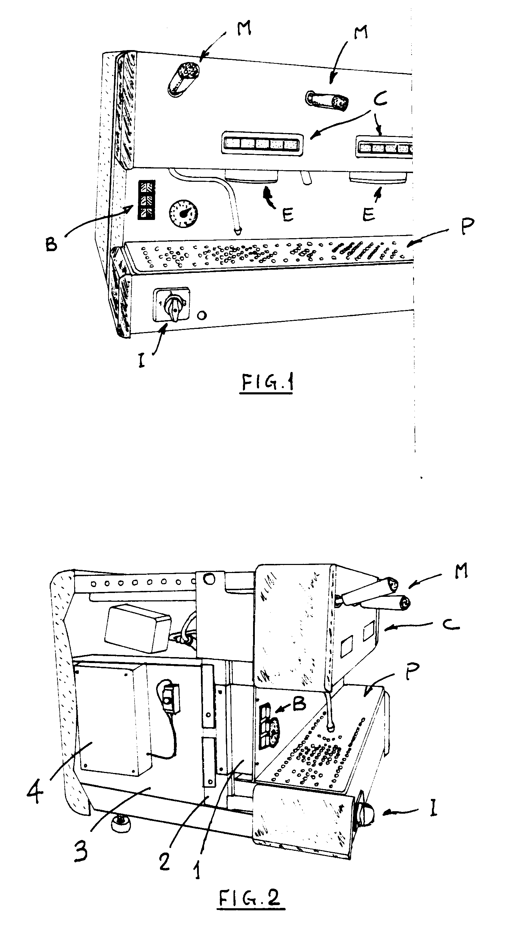

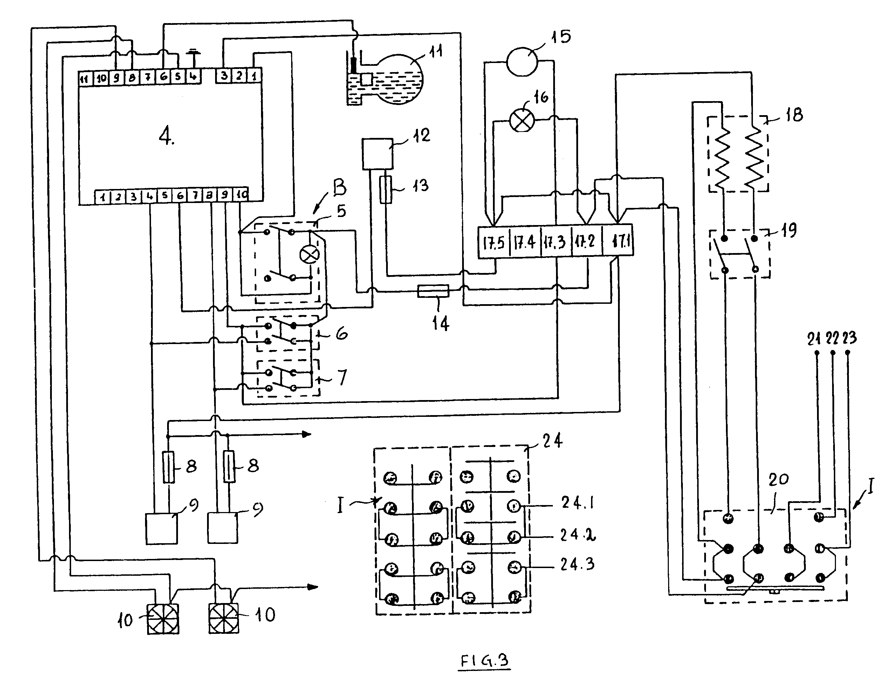

Referring to the figure 2 the emergency command device B) is placed laterally (1) separated with wall (2) from the place (3) where is allocated the microprocessor (4) and all the electronic circuitry that extend even in the superior within said programming commands (C).

In this way maintenance is extremely facilitated, and the coffee machine can continue to function even if it is opened the carter and even if the respective electronic apparatuses will be removed for repairing.

With this solution is further avoided removal of the machine.

Referring to the scheme of figure 3 the emergency device (B) comprises:

– a switch (5) that signals with the lighting (16) in associating with fuse (14) and with lighting in the cutoff electric power supply of the electronic microprocessor (4) and maintaining a bridge of current directly with the pump means (15) of hot water passing from exchanger (26) in the boiler (11) with water/coffee supply unit (E);

– the second ones switch (6, 7) with fuses (8) activate them respective solenoid valve means (9).

It is clear that in this way the espresso coffee supply, short or long following the respective necessity of the client, can be done manually without the intervention of the electronic control board or microprocessor (4). Obviously are deactivated also the respective counters (10) that are usually operated from said microprocessor (4), and level maintaining solenoid valve (12) with respective fuse (13), whereas the resistances (18), pressostat (19) end general switch (I) function regularly. For example and only for constructive purposes and/or for the intelligence of the operativety of the machine, the general switch (I) indicated with (20-24) presents the first phase indicated with (21-24.3), the second phase indicated with (22-24.1) end the neutral indicated with (23-24.2)

Substantially with the enclosed electrical block-schema on intends point out that the espresso coffee machine is of the type utilizing a three ways solenoid valve means with the condition of usually opened discharge mouth and interdiction of hot water circulation with the exchanger ( 26 ) in boiler (11), comprising :

– at least a switch/breaker for cut-off the power supply to said electronic control board or microprocessor (5) and further supply electric power for the direct operation of the respective hot water pumping means (15) for a respective hot water/coffee supply unit (E) in order to allow notwithstanding coffee issue;

– at least a switch/breaker of respective hot water/coffee supply unit (E) that operates the respective solenoid-valve (9) for authorizing the supply of hot water in said supply unit (E) interdicting the respective discharge/wasting line.

## Claims

1. An espresso coffee machine with electronic management control board or microprocessor, outfitted with emergency command particularly for Public Service, characterized in that it comprises emergency command means (B) that:

– cutoff the electric power to the line feeding said electronic management control board/microprocessor (4);

– intervene directly for operating on a first solenoid valve means (9) of at least a respective hot water supply unit (E) in association with a hot water supply pump means (15) from an exchanger (26) in a hot water boiler (11) and on a second solenoid valve means (12), in order to allow emergency supply in said hot water supply unit (E).

2. An espresso coffee machine as claimed in claim 1, of the type utilizing three ways solenoid valve means with the condition of usually opened discharge mouth and interdiction of hot water circulation with the exchanger (26) in boiler (11), comprising:

– at least a switch/breaker for cutting-off the power supply to said electronic control board or microprocessor (5) and further supply electric power for the direct operation of the respective hot water pumping means (15) for a respective hot water/coffee supply unit (E) in order to allow notwithstanding coffee issue;

– at least a switch/breaker of respective hot water/coffee supply unit (E) that operates the respective solenoid-valve (9) for authorizing the supply of hot water in said supply unit (E) interdicting the respective discharge/wasting line.

3. An espresso coffee machine as claimed in claim 1, characterized in that said commands for actuating said solenoid valve means (6-7), are manufally temporized.

4. An espresso coffee machine as claimed in claim 1, characterized in that said microprocessor (4) and said emergency commands (B) are placed laterally to said supply units, being further provided a detachable lateral carter for accessing both said microprocessor (4) and emergency command means (B).

5. An espresso coffee machine as claimed in claim 1, characterized in that said emergency command-means are set in proximity of the respective breaker general of power line (I).

6. An espresso coffee machine as claimed in claim 1, characterized in that said emergency command means comprises signal buttons (5) that lights when said breakdown has been actuated.

7. An espresso coffee machine as claimed in claim 1, characterized in that:
   – the power line breakdown switch (B) to cut off electric power to said microprocessor (4) comprise light signal means (5) that lights when said breakdown has been actuated;
   – the respective supply pump means (15) are equipped with further light signal means (16) for visualizing that the respective pumps are in operation.

8. An espresso coffee machine as claimed in claim 1, characterized in that said emergency commands are linked in such a way that, when the microprocessor power is cut-off:
   – the counters (10),
   – the level maintaining solenoid valve (12).

9. An espresso coffee machine as claimed in claim 1, characterized in that said emergency command means (B) are linked in such a way that, when the power cat-off of the microprocessor is actuated by said emergency commands, electric power is assured to:
   – respective warming resistance means (18) for maintaining the temperature in boiler (11),
   – respective control pressure pressostat means (19) in said boiler (11) and general main breaking switch (I).

10. An espresso coffee machine as claimed in claim 1, characterized in that said emergency command means (B) are linked in such a way that, with the disactivation of the microprocessor, said emergency command means:
   – will deactivate also:
      – the counter means (10),
      – the level maintaining solenoid valve (12);
   – will maintained in electrical power connection at lest:
      – respective warming resistance means (18) for maintaining the temperature in boiler (11),
      – respective control pressure pressostat means (19) in said boiler (11). and main general power breaker supply (I).

11. An espresso coffee machine as claimed in claim 1, characterized in that said emergency command means (B) are linked downwards the respective main general breaker power supply (I) and upwards the respective microprocessor (4).

12. An espresso coffee machine as claimed in claim 1, characterized in that said emergency command means (B) are linked:
   – Downwards of a terminal-board of shunting (17 , . . . . .) alimented from a respective main general power breaker (I):
   – Upwards respective microprocessor (4);
   – said terminal-board (17 , . . . . .) being able to supply power current, through said main power general breaker (I) with eventual operative switch (19), And respective resistance means (18) for maintaining the respective temperature of work in said boiler (11).

## Patentansprüche

1. Eine Espresso-Kaffeemaschine mit elektronischer Steuer- und Kontrollarmatur oder Mikroprozessor, besonders für den Einsatz im öffentlichen Bereich mit einer Notschaltung ausgestattet, gekennzeichnet dadurch, daß sie Notschaltungseinrichtungen (B) umfaßt, die:
   – den Strom abschalten zu der Leitung, die die besagte elektronische Steuer- und Kontrollarmatur/Mikroprozessor (4) speist;
   – direkt auf einem ersten Solenoidventilelement (9) von mindestens einer Heißwasser-Zufuhreinheit (E) tätig werden, in Zusammenwirkung mit einer Heißwasser-Zufuhrpumpe (15), von einem Tauscher (26) in einen Heißwasserboiler (11), sowie auf einem zweiten Solenoidventilelement (12) zwecks Notzufuhr in besagte Heißwasser-Zufuhreinheit (E).

2. Eine Espresso-Kaffeemaschine wie nach Anspruch 1., mit Dreiweg-Solenoidventilelementen gewöhnlich im Zustand offener Auslaßöffnung und Unterbindung des Heißwasserkreislaufs mit dem Tauscher (26) im Boiler (11), mit
   – mindestens einem Schalter/Unterbrecher zur Abschaltung des Stroms zu besagter elektronischer Kontrollarmatur oder Mikroprozessor (5) und des weiteren zur Zufuhr von Strom für den direkten Einsatz der Heißwasserpumpe (15) für eine Heißwasser/Kaffee-Zufuhreinheit (E), um dennoch die Kaffeeausgabe zu gestatten;
   – mindestens einem Schalter/Unterbrecher der besagten Heißwasser/Kaffee-Zufuhreinheit (E), der das Solenoidventil (9) betätigt, um die Zufuhr von heißem Wasser zur genannten Zufuhreinheit (E) zu erlauben, unter Abbindung der betreffenden Ablauf/Rückstandsleitung.

3. Eine Espresso-Kaffeemaschine wie nach Anspruch 1., gekennzeichnet dadurch, daß besagte Steuerungen zur Bedienung der Solenoidventilelemente (6-7) per Hand abgepaßt werden.

4. Eine Espresso-Kaffeemaschine wie nach Anspruch 1., gekennzeichnet dadurch, daß der genannte Mikroprozessor (4) und die erwähnte Notschaltung (B) seitlich zu den besagten Zufuhreinheiten angeordnet sind, wobei außerdem ein abnehmbarer seitlicher Schlepper (Carter) vorhanden ist für den Zugang sowohl zu dem genannten Mikroprozessor (4) als auch zu der Notschaltung (B).

5. Eine Espresso-Kaffeemaschine wie nach Anspruch 1., gekennzeichnet dadurch, daß die erwähnten Notschaltungen in der Nähe des Hauptschalters (I) der Leitung sitzen.

6. Eine Espresso-Kaffeemaschine wie nach Anspruch 1., gekennzeichnet dadurch, daß die genannte Notschaltung Signalknöpfe (5) umfaßt, die aufleuchten, wenn die besagte Unterbrechung ausgeführt worden ist.

7. Eine Espresso-Kaffeemaschine wie nach Anspruch 1., gekennzeichnet dadurch, daß
– der Leitungs-Unterbrechungsschalter (B) zur Abschaltung der Stromzufuhr zu besagtem Mikroprozessor (4) eine Lichtsignaleinrichtung (5) enthält, die aufleuchtet, wenn die besagte Unterbrechung ausgeführt worden ist;
– die Zufuhrpumpen (15) mit weiteren Lichtsignaleinrichtungen (16) ausgestattet sind, um sichtbar zu machen, daß die Pumpen arbeiten.

8. Eine Espresso-Kaffeemaschine wie nach Anspruch 1., gekennzeichnet dadurch, daß die genannten Notschaltungen so verbunden sind, daß bei Abschaltung des Stroms für den Mikroprozessor auch
– die Zähler (10) und
– das pegelregulierende Solenoidventil (12) ausgeschaltet sind.

9. Eine Espresso-Kaffeemaschine wie nach Anspruch 1., gekennzeichnet dadurch, daß die genannten Notschaltungen (B) so verbunden sind, daß bei Abschaltung des Stroms für den Mikroprozessor durch die Notschaltungen die Stromzufuhr gewährleistet ist zu
– einer Wärme- Widerstandseinrichtung (18) zur Temperaturerhaltung im Boiler (11),
– einer Kontrolldruck- Pressostateinrichtung (19) in besagtem Boiler (11) und einem General-Hauptunterbrechungsschalter (I).

10. Eine Espresso-Kaffeemaschine wie nach Anspruch 1., gekennzeichnet dadurch, daß die genannten Notschaltungen (B) so verbunden sind, daß bei Abschaltung des Stroms für den Mikroprozessor die besagten Notschaltungen
– auch
– den Zähler (10) und
– das pegelregulierende Solenoidventil (12) ausschalten und
– die Stromzufuhr gewährleisten zu
– der Wärme- Widerstandseinrichtung (18) zur Temperaturerhaltung im Boiler (11) und der

– Kontrolldruck- Pressostateinrichtung (19) in besagtem Boiler (11) und dem General-Hauptunterbrechungsschalter (I).

11. Eine Espresso-Kaffeemaschine wie nach Anspruch 1., gekennzeichnet dadurch, daß die genannten Notschaltungen (B) nach unten mit dem GeneralHauptunterbrechungsschalter (I) und nach oben mit dem Mikroprozessor (4) verbunden sind.

12. Eine Espresso-Kaffeemaschine wie nach Anspruch 1., gekennzeichnet dadurch, daß die genannten Notschaltungen (B) verbunden sind:
– nach unten mit einem Nebenschluß-Klemmbrett (17, ....), das von einem General-Hauptunterbrechungsschalter (I) gespeist wird:
– nach oben mit besagtem Mikroprozessor (4);
– wobei das genannte Klemmbrett (17, ....) durch besagten General-Hauptunterbrechungsschalter (I) mit eventuellem operativen Schalter (19) Strom zuführen kann, und die besagte Widerstandseinrichtung (18) zur Erhaltung der Arbeitstemperatur in besagtem Boiler (11).

## Revendications

1. Une machine à café express avec contrôle électronique ou microprocesseur, spécialement équipée d'une commande de secours, pour les services publics, caractérisée par le fait qu'elle contient des commandes de secours (B)qui:
– coupent le courant sur le cable d'alimentation dudit contrôle électronique ou microprocesseur (4) ;
– intervient directement pour agir sur un premier robinet solénoide (9) d'au moins une des deux unités d'alimentation en eau chaude (E) en association avec une pompe d'alimentation en eau chaude (15) à partir d'un échangeur (26) dans un récipient où l'eau bout (11) et sur un second robinet solénoide (12), de façon à permettre une alimentation de secours dans l'unité d'alimentation en eau chaude (E).

2. Une machine à café express selon la revendication 1, du type qui utilise un robinet solénoide à trois sorties avec la bouche de débit ouverte habituellement requise et empêchement de circulation d'eau chaude avec l'échangeur (26) dans le récipient où l'eau bout (11), qui comprend:
– au mois un interrupteur pour couper l'alimentation en courant électrique sur ledit contrôle électronique ou microprocesseur (5) et une alimentation supplémentaire en courant électrique pour la directe opération respective de pompage d'eau chaude (15) pour la respective unité d'alimentation en eau/café chaud(e) (E) de façon à permettre un écoulement du café sans résistance;
– au moins un interrupteur pour l'unité (E) d'alimentation respective en eau/café chaud (e) qui actionne le robinet solénoide respectif (9) de façon à pernnettre l'alimentation en eau chaude dans ladite unité d'alimentation (E) empêchant la décharge et la perte de la ligne respective.

3. Une machine à café express selon la revendication 1, caractérisée par le fait que lesdites commandes pour actionner lesdits robinets solénoides (6-7) sont adaptées manuellement.

4. Une machine à café express selon la revendication 1, caractérisée par le fait que ledit microprocesseur (4) et lesdites commandes de secours (B) sont placées sur le coté desdites unités d'alimentation, et munie en supplément d'une boite latérale détachable pour accéder au microprocesseur (4) et aux commandes de secours (B).

5. Une machine à café selon la revendication 1, caractérisée par le fait que les commandes de secours sont situées à proximité du rupteur général de courant (1).

6. Une machine à café express selon la revendication 1, caractérisée par le fait que les commandes de secours comprennent des boutons de signalement (5) qui clignotent quand il y a eu une coupure de courant.

7. Une machine à café express selon la revendication 1, caractérisée par le fait que:
- l'interrupteur de courant (B) pour couper le courant électrique dudit microprocesseur (4) comprend un signal lumineux qui s'allume quand il y a eu coupure de courant;
- la pompe d'alimentation respective (15) est équipée d'un signal lumineux (16) supplémentaire pour visualiser que les pompes respectives sont en action.

8. Une machine à café express selon la revendication 1, caractérisée par le fait que les commandes de secours sont reliées de telle manière que lorsque le courant du microprocesseur est coupé son aussi desactives:
- les compteurs ( 10)
- le tube qui maintient le robinet solénoide.

9. Une machine à café express selon la revendication 1, caractérisée par le fait que lesdites commandes de secours (B)sont reliées de telle manière que lorsque la coupure de courant du microprocesseur est réalisée par lesdites commandes de secours, le courant électrique est assuré à:
- la resistance chauffante respective (18) pour maintenir la température dans le récipient où l'eau bout (11),
- au pressostat de contrôle de la pression dans ledit récipient et au principal interrupteur général.

10. Une machine à café selon la revendication 1, caractérisée par le fait que lesdites commandes de secours (B) sont reliées de telle manière que lorsque le micoprocesseur est désactivé, lesdites commandes de secours:

- désactivent également:
  - le compteur (10)
  - le tube qui maintient le robinet solénoide (12)
- maintiennent branché au courant électrique au moins:
  - la résistance chauffante respective (18) pour maintenir la température dans le récipient où bout l'eau (11),
  - le pressostat respectif de contrôle de la pression (19) dans ledit récipient (11), et le principal rupteur général d'alimentation en courant électrique (1).

11. Une machine à café express selon l'a revendication 1, caractérisée par le fait que les commandes de secours sont reliées en bas du principal rupteur général d'alimentation en courant électrique respectif (1) et en haut du microprocesseur respectif (4).

12. Une machine à café express selon la revendication 1, caractérisée par le fait que lesdites commandes de secours (B) sont reliées:
- Au bas d'un terminal de dérivation (17,......) alimenté par un rupteur général respectif d'alimentation en courant électrique (1):
- En haut du microproesseur respectif (4);
- ledit terminal (17........) étant capable de fournir du courant électrique, grâce audit rupteur général d'alimentation en courant électrique (1) avec un éventuel interrupteur opératif (19), et une résistance respective pour maintenir la température de travail respective dans ledit récipient où bout l'eau (11).

FIG.1

FIG.2

FIG.3

FIG. 4